# EUROPEAN PATENT APPLICATION

(11) **EP 1 006 486 A2**
(43) Date of publication of application: **07.06.2000**
(21) Application number: 99123252.1
(22) Date of filing: 29.11.1999
(51) Int. Cl.: G07C 5/08

(54) **Car-mounted image recording system**

(30) Priority: 30.11.1998 JP 35378698; 01.11.1999 JP 34659199
(71) Applicant: Tuner Corporation, Tanashi-shi, Tokyo (JP)
(72) Inventor: Ohashi, Tamaki, Tanashi-shi, Tokyo (JP)
(74) Representative: Riederer Freiherr von Paar zu Schönau, Anton

(57) **Abstract**

The car-mounted image recording system disclosed herein provides recorded images of the driving state of a driver. It includes image capture means (2,2a-2c,21-24) provided at suitable positions of the car (P) for capturing images of the scenery outside of the car, and image recording means (4,4a-4d) for recording the images captured by the image capture means. The captured, recorded images include images of a part of the car and a part of a road (10) in relation to the car. The captured images are utilized as a proof of safe driving. The car-mounted image recording system also includes image display means (16,18) for displaying the captured images, so that the driver of the car can gain information on backward or/and forward visions from the car. Thereby, the driver can also check the operating state of the image recording system. Further, the car-mounted image recording system enables the monitoring of risky driving. As a result, the car-mounted image recording system provides safer driving of the car.

## Description

### FIELD OF THE INVENTION

The present invention relates to a car-mounted system for displaying and recording images of visions outside the running car and an image of the running state of the car, and particularly, to a system which provides the driver with information on the running state of the car before the car has an accident, and with record material after the car had an accident.

### BACKGROUND OF THE INVENTION

In the recent years, a car is one of the vehicles which are daily necessary for humans. A driver has to take driving lessons and learn traffic regulations to obtain a driving licence and driving school, before he actually drives his car. The driving school instructors instruct drivers to drive their cars with safety and keep to traffic regulations. However, once the drivers obtained their driving licences, they tend to accelerate the cars to speeds in excess of the speed limit because due to a feeling of haste they give priority to speeding instead of safety driving. Also, the number of cars increases. As a result, the drivers have traffic accidents. The number of traffic accidents is permanently increasing these days.

Every driver desires that the traffic accidents disappear from the world. For the above reason, many of the drivers try to adopt a safe driving, sticking on a window one of these stickers on which words are written such as "This car is driven at a speed less than 80 km per hour on a highway", or "After you, the car is driven aside by traffic rules". However, when the drivers drive a car and have closed the door, they are enclosed inside of their car and can not communicate with the outer world. The drivers also have a feeling that they are in a closed world. For the reason, once drivers start taking a ride, they have a tendency to completely change their personality. That is to say, thereby the car drivers are apt to cause traffic accidents.

When a traffic accident occurs, an inquisition will be made after the accident. Such inquisition will be dependent on a witness between the parties. In many cases, it is supposed that if the victim is inexperienced in coping with an accident or dies after the accident, the assailant often will lay the fault on the victim. That is to say, even if the victim took a save drive without any fault, the evidence has to be proved.

From the above viewpoints, various systems to be used with cars for investigating the driving state of the driver were proposed. Such systems are disclosed in Publication Nos. 1993(Heisei 5)-20592 (Kumagai), 1993-294188, 1993-137144 (Takahashi), and 1993-345547 (Wolfgang) of unexamined Japanese Patent applications (Kokai).

Publication No. 1993(Heisei 5)-20592 discloses a system for recording the running state of the car. The system comprises: an image capture device for capturing a forward vision from the car as image input information; a controller apparatus for controlling the image capture device such that the image capture device operates from the start of the engine, and such that it detects a stop signal from the engine, the controller apparatus having functions of input/output datum on time, speech, acceleration and deceleration; and a record device for recording at least one of the output data from the controller apparatus. The image capture device of the system is mounted on the dashboard in the car or a surface of a front portion in the vicinity of the radiator a group of the car.

The Publication No. 1993(Heisei 5)-294188 discloses a car-mounted image record system. The image record system includes: a camera provided at the rear or front end of the car for capturing an image of the backward or forward scenery from the car; and a display provided in the cabin of the car for displaying the captured image on a scope thereof; a car-mounted image recording device accommodated in a heat-resistant box for recording the captured image, which was displayed on the scope of the display; a signal switch circuit for alternatively switching the display or the image recording apparatus; an acceleration detection circuit for detecting the mass of quick brake for the car per a predetermined time; and a microcomputer for controlling said signals switch circuit such that the operation of the signals switch circuit is allowed for driving the image record device only at the time when the microcomputer detected the mass of brake in excess of the predetermined mass, and thereby the image signal is inputted in the image record device.

The Publication No. 1993(Heisei 5)-137144 discloses a system for monitoring an accident by the use of a digital electronic camera. The system includes a digital electronic camera mounted on the ceiling surface above the driver's seat of a car for capturing an image of the forward scenery from the car during the time when the car is running, and a memory card for recording the captured image. After the memory card is filled to capacity, the recorded image is overwritten by new image data. When a sudden brake is performed by the driver, a sensor outputs an urgency signal after the detection of the braking state, thereby the digital electronic camera captures the detected location during the braking state. The captured image is recorded at predetermined intervals of frames, before the system completes the record operation.

The publication No. 1993(Heisei 5)-345547 discloses a car-mounted observation/monitor system for traffic accidents. The system includes at least one electronic detection device mounted above or inside of the front bumper of the car, and an image storage apparatus connected to the electronic detection device.

As described above, it is apparent that the conventional systems for investigating the driving state of the driver were directed to the capture of the image of the forward or backward scenery from the car only.

Generally, the evidentiary facts of the traffic accident will be testified, based on the location or direction after the final stopping, on the damage state of the objective cars and on wheel tracks on the road. The reason why many of the accidents are caused is that, for example, when one car stopped before passing an intersection, another car comes from the right or left side of the intersection and collides with the stopped car; when one car stopped before entering a main line from a branch line, another car coming from the main line collides with the stopped car; or when one car runs straight on the road, another car comes and collides with the side face of the former car. Therefore, the most important evidentiary fact is that either of the cars stopped or ran straight.

It is impossible to exactly testify the evidentiary facts only based on the final stop location or direction, on the damage state of objective cars, and on wheel tracks on the road. According to the circumstances, the cause of the traffic accident will not be found. In order to testify the evidence that the cars stopped or ran, the movement of the cars has to be found out. The movement of a car can be proved by recording the movement of a part of the car with respect to the surface of the road. Therefore, the conventional system will not provide an exact testimony.

The conventional systems as described above can capture only an image of a part of the surface of the road on which the car is running. However, the conventional systems provide only a recognition of the movement of an oncoming car with respect to a running car. Therefore, the conventional system can not always monitor the driving state of the driver to call the driver's attention if he drives dangerously. Furthermore, if the car had an accident, the conventional systems can not provide an exact testimony in relation to a direct or first accident or a second accident caused subsequently to the first accident. Particularly, according to the system disclosed in Japanese patent publication No. 1993(Heisei 5)-294188, in order to capture an image of the movement of the driver's car, the sudden braking will have to be detected. The system can not testify the stopped state of the driver's car.

### SUMMARY OF THE INVENTION

Accordingly, considering the above discussed points, an objective of the present invention is to provide a system for monitoring the driving state of a car driver. The car-mounted image record system enables monitoring and recording the car of the driver. Thereby, the car-mounted record system provides control of risky driving by the driver. As a result, the driver always will feel urged to pay attention to his sate driving.

Furthermore, if the driver is performing a safe driving before his car has an accident, the car-mounted image record system will prove his safe driving. Therefore, the driver can rely on his safe driving.

Consequently, when the car has the car-mounted image system installed, it will actually be called a safely-driven-car. Although the driver has to spend some money on purchasing the car-mounted image record system, such money is not comparable to his life.

It can be said that if all of the cars carried the car-mounted image system, no car accident would be caused in the world. This is a final objective for the present invention, and the applicant's desire.

The system includes at least one image capture unit mounted at a suitable position of the car for capturing images of the scenery outside of the car, the captured image including images of a part of the automobile and the surface of the road. The captured images are displayed on a display of a monitor device in front of the driver, while the image data are permanently recorded on a record medium of the image record device, and stored in the image record device for testifying the evidentiary facts, and thereby any dangerous driving by the driver is always monitored. The record device can be prevented from breakage caused by an accident by the use of a protective box with excellent mechanical strength. The image capture device captures an image of a part of the car, and the surface of the road in relation to the car. The captured images are continuously recorded on or stored in the record medium of the image record device.

The captured image includes images of the surface of the road under the car, so that the movement of the car is exactly registered by the captured image.

Furthermore, when the image of the surface of the road in relation to the car is captured by the image capture device, the image capture device captures the image of the surface of the road extending from the vicinal area around the car to the underside of the car. The movement of the car is exactly proved by such captured image.

The image capture unit comprises a camera mounted so as to face in the backward and downward directions, at the front portion on the side of the car, or is mounted to face in the forward and downward directions, at the rear portion on the side of the car. In addition, the image capture unit can comprise cameras mounted at the front and rear portions of the body of the car and/or mounted at the right and left portions of the body of the car.

Furthermore, the image capture unit can comprise a camera for front vision for capturing the image of the forward scenery from the car, a camera for rear vision for capturing the image of the backward scenery from the car, and/or a camera for side vision for capturing the image of the sideward scenery from the car, each of the captured images including the image of a part the car. Preferably, the cameras for front vision, for rear vision, and/or for side vision are mounted on opposite sides of the car, respectively.

Furthermore, the image capture unit can comprise cameras for both, i.e. for front vision for capturing an image of the scenery outside of the car, the captured image including the forward scenery from the car, and for rear vision for capturing an image of the scenery outside of the car, the captured image including the backward scenery from the car. Particularly, the camera for front vision and the camera for rear vision are mounted at the front and rear portions on the opposite sides of the body of the car so as to capture a wider image of the scenery at the side areas from the car.

Furthermore, the captured image is displayed on the display of the monitor device, so that to the driver can check the operation of the car-mounted image record system.

The image record unit can further comprise an adapter for compounding the images captured by the different cameras, and a record device for recording or storing the captured images of the image capture devices. All of the captured images can be simultaneously displayed on a scope of the display of the monitor device. The scope of this display is divided into a plurality of areas with equal size in accordance with the number of cameras. The monitor device can also include a selection switch for selecting one of the images captured by the cameras so as to cause this image only to be displayed on the display of the monitor device.

Furthermore, the car-mounted image record system includes a date/time information writing device for additionally writing information on the date and time into the images captured by the image capture devices.

### BRIEF DESCRIPTION OF DRAWINGS

FIG. 1 is a view illustrating a car and areas, i.e. an area right under the car and a vicinal area of the car.
FIG. 2 is a plan (or top) view illustrating the car, comprising a car-mounted image record system according to a first arrangement of a first embodiment of the present invention.
FIG. 3 is a side view of the car of FIG. 2.
FIG. 4 is a block diagram of the car- mounted image record system according to the first embodiment of the invention.
FIG. 5 is a view illustrating a displayed image on a display according to the first embodiment of the invention.

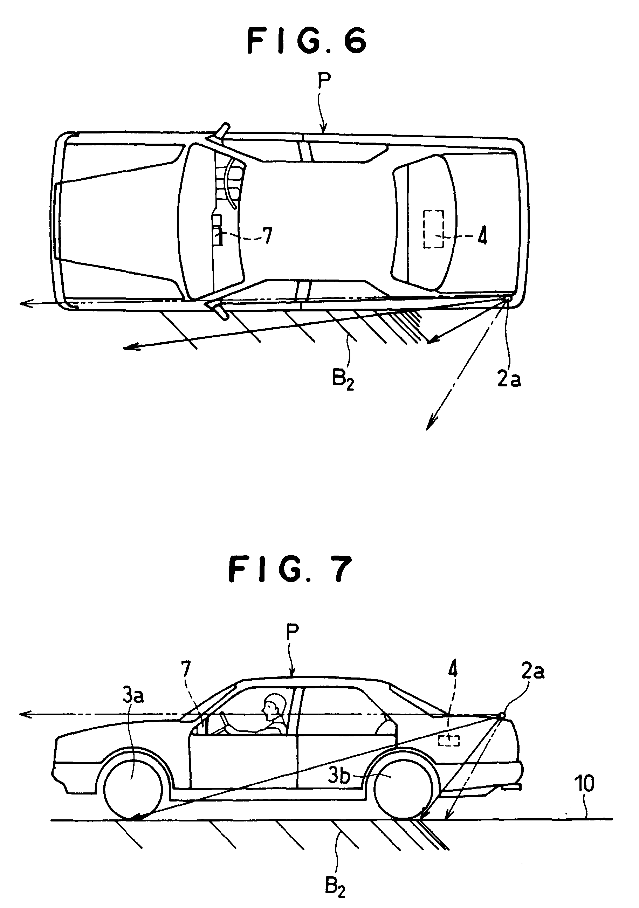

FIG. 6 is a top view illustrating a car comprising a CCD camera, relating to a second arrangement according to the first embodiment of the invention.
FIG. 7 is a side view of the car of FIG. 6.

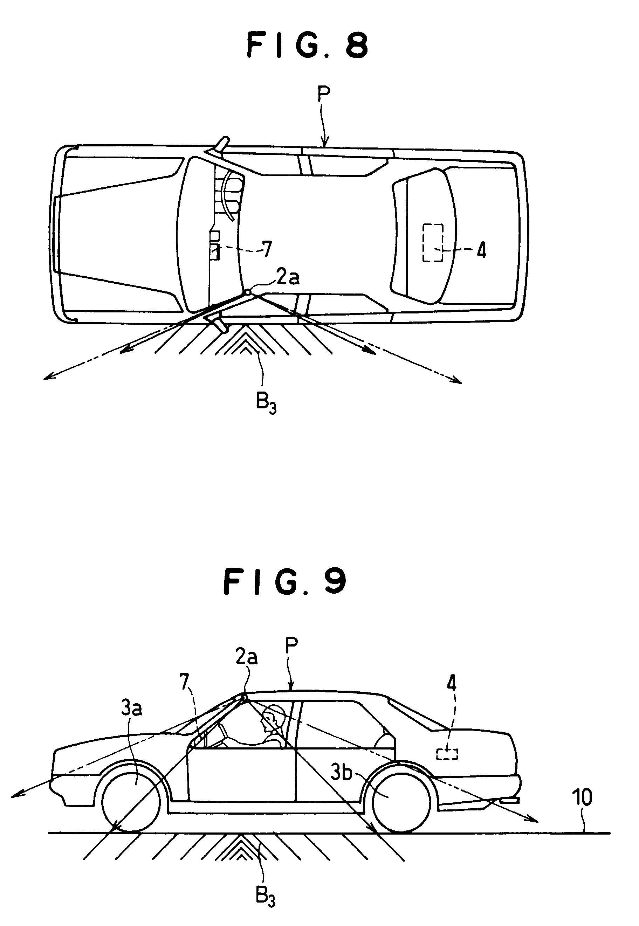

FIG. 8 is a plan view illustrating a car comprising a CCD camera, relating to a third arrangement according to the first embodiment of the invention.
FIG. 9 is a side view of the car of FIG. 8.

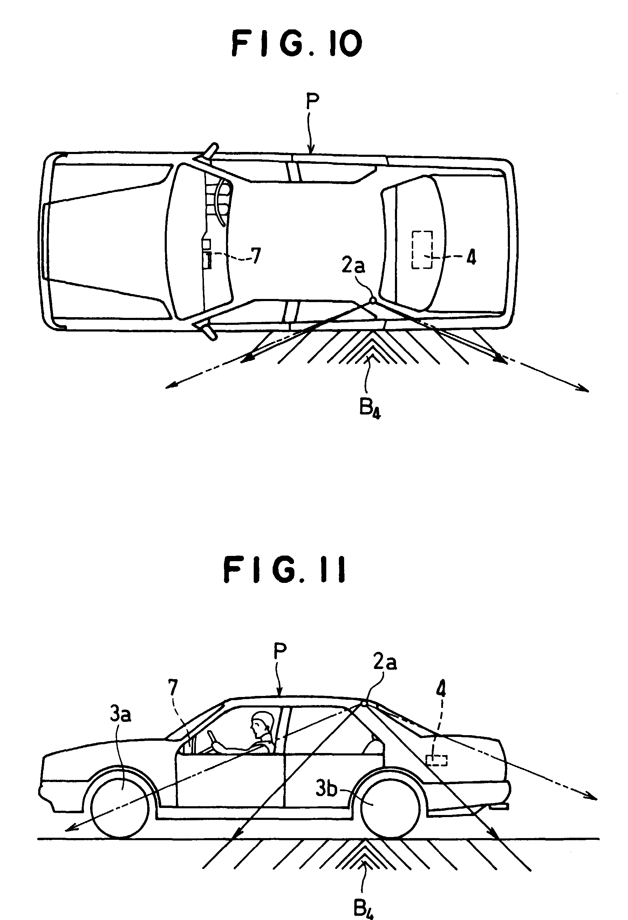

FIG. 10 is a top view illustrating a car comprising a CCD camera, relating to a fourth arrangement according to the first embodiment of the invention.

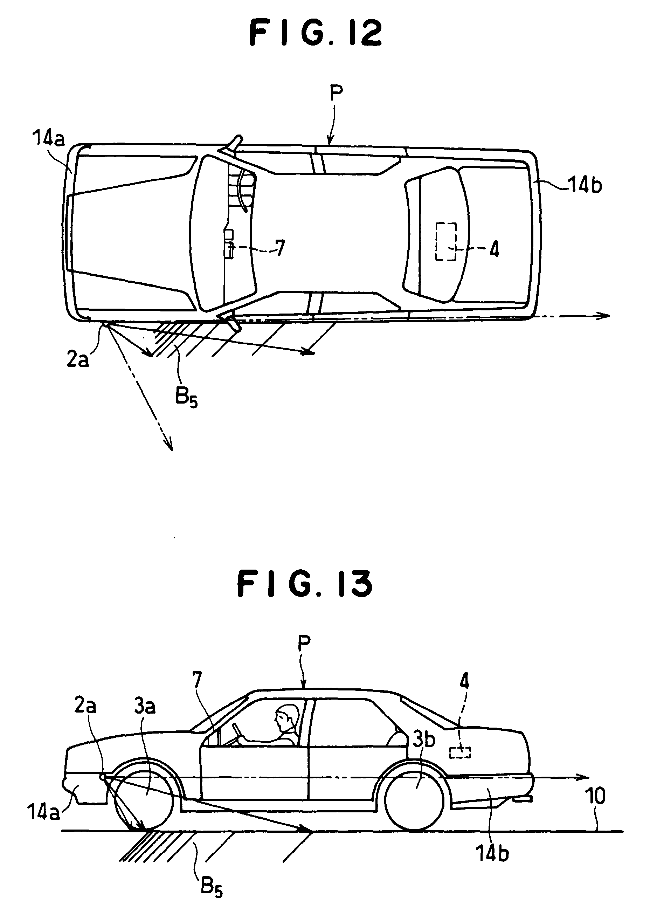

FIG. 11 is a side view of the car of FIG. 10.
FIG. 12 is a top view illustrating a car comprising a CCD camera, relating to a fifth arrangement according to the first embodiment of the invention.
FIG. 13 a side view of the car of FIG. 12.

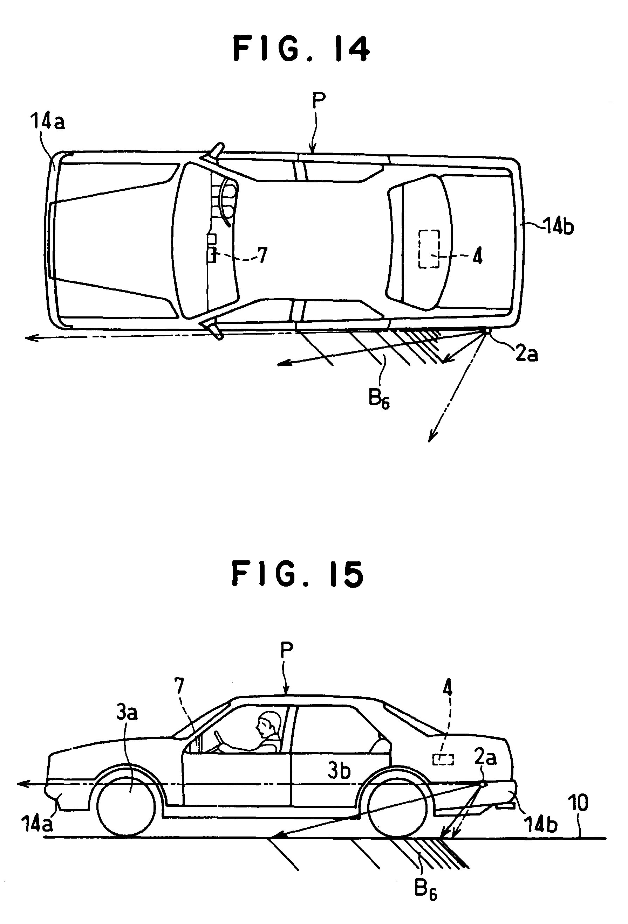

FIG. 14 is a top view illustrating a car comprising a CCD camera, relating to a sixth arrangement according to the first embodiment of the invention.
FIG. 15 is a side view of the car of FIG. 14.
FIG. 16 is a view illustrating a displayed image on a display according to the CCD camera mounted to the car in the manner of the above sixth arrangement of the invention.

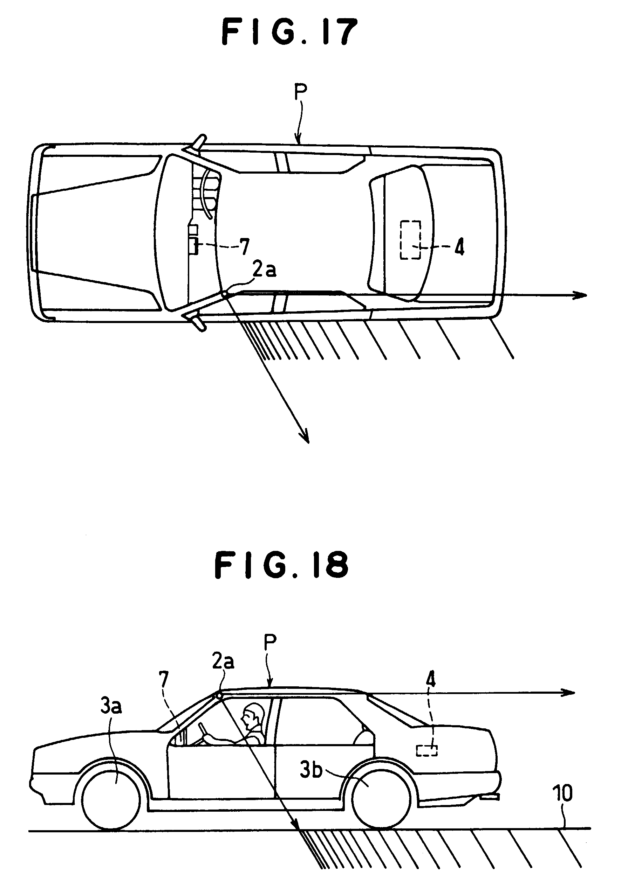

FIG. 17 is a top view illustrating a car comprising a CCD camera, relating to a first arrangement according to a second embodiment of the invention.
FIG. 18 is a side view of the car of FIG. 17.

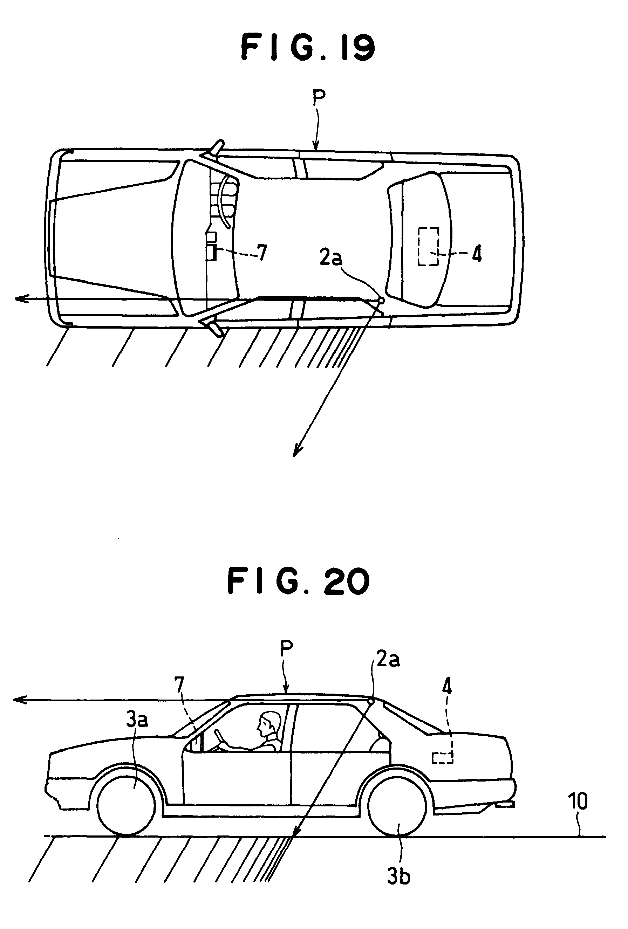

FIG. 19 is a top view illustrating a car comprising a CCD camera, relating to a second arrangement according to the second embodiment of the present invention.
FIG. 20 is a side view of the car of FIG. 19.
FIG. 21 is a view illustrating a displayed image on the display according to the CCD camera having a wide-angle lens, relating to the second embodiment of the present invention.

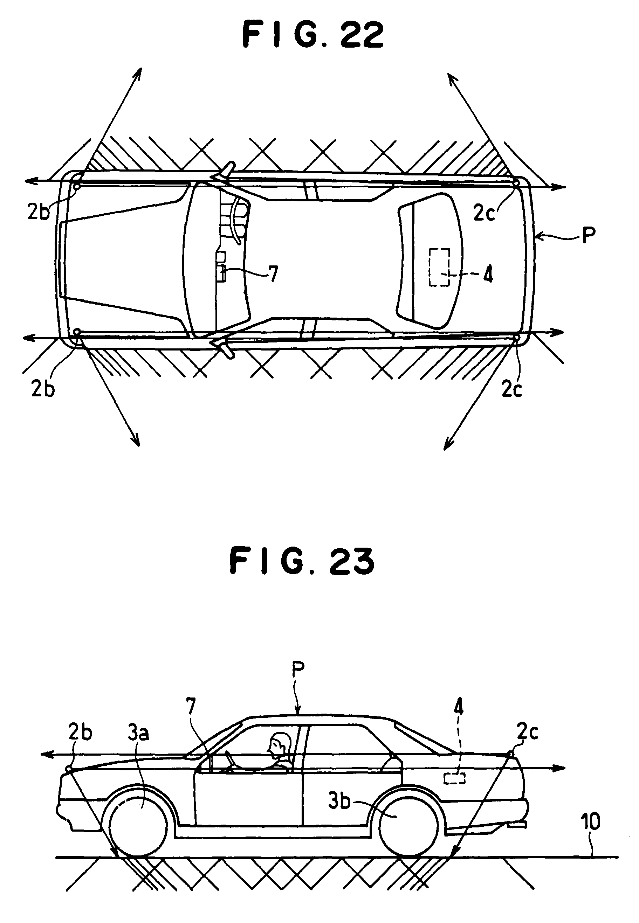

FIG. 22 is a top view illustrating a car comprising a plurality of CCD cameras, relating to a third embodiment of the invention.
FIG. 23 is a side view of the car of FIG. 22.
FIG. 24 is a block diagram of a car-mounted image record system, relating to a first construction according to a third embodiment of the present invention.
FIG. 25 is a block diagram of a car-mounted image record system, relating to a second construction according to the third embodiment of the present invention.

### DESCRIPTION OF PREFERRED EMBODIMENT

Referring now to the drawings, description of the embodiments according to the present invention will be made hereinafter.

### Embodiment 1

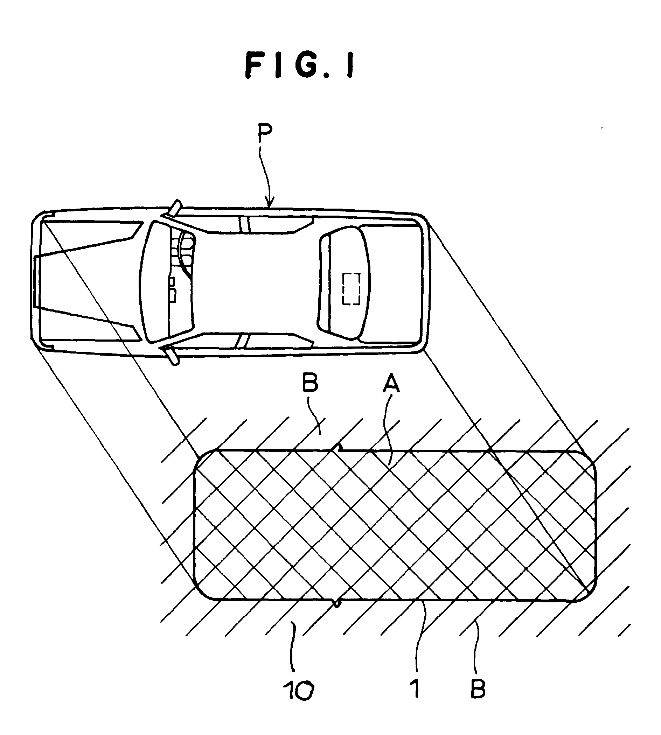

FIG. 1 shows an embodiment according to the present invention. The driver is driving a car P on a road 10. The "car P" includes large-sized, stock, compact, sub compact, and custom-made cars. A lateral rectangular outline 1 denotes an outline of the car P (a passenger car) as projected just above by parallel rays. The lateral rectangular outline 1 surrounds an area A shown by hatching in across oblique lines. The area A is just under the car. The area A is surrounded by an area B shown by hatching in unidirectional oblique lines around the lateral rectangular outline 1. The area B is in the vicinity of the car on the road.

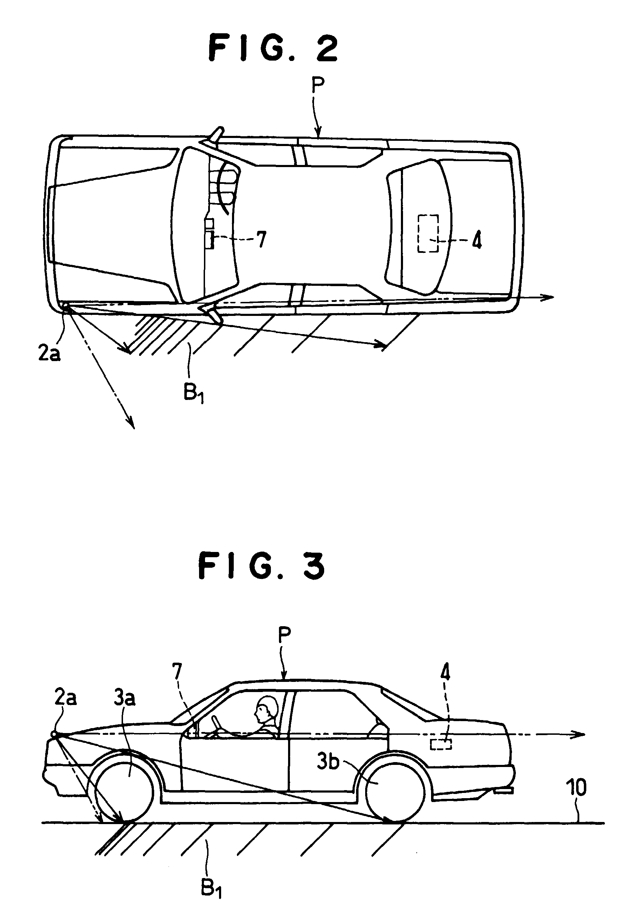

FIG. 2 and 3 show a plan view and a side view, respectively, of the car P according to a first embodiment of the present invention. The car P has a single CCD camera 2a mounted for a view in the rearward and downward directions, on the upper surface at the leading end of the front portion thereof, the camera protruding sideward from the upper surface. The position for mounting the CCD camera 2a is not limited to the left side. The car shown in the drawings is a Japanese or English one. If the car P has a left side steering wheel, the CCD camera 2a may be mounted on a right upper surface at a leading end of the front portion of the car P. The single CCD camera 2a can generally be a video camera, a digital camera, etc. It has an angle of view of about 60 degree.

With the construction, since the CCD camera 2a is mounted for a view in the rearward and downward directions on the front portion of the car P, it can capture a wide area of the surface of the road 10 in the vicinity of the driver's car (as indicated by the two-dot chain line and an arrow), and an area B₁ in the vicinity of the left front wheel 3a (as indicated by continuous line arrows and oblique hatching lines).

Furthermore, the camera can also capture a part of the body of the car P in the vicinity of the front wheel 3a. Thereby, the relation between the car P and the surface of the road can be recorded.

The angle of view of the CCD camera 2a is not limited to 60 degree. However, considering the distinct image and the field of vision in the vicinity of the wheel 3a with respect to the mounted position, to a simple adjustment in mounting, and to deviations of the CCD camera caused by the vibrated car, as time passed, the preferable and effective angle is from 50 to 85 degree. The angle of view of the CCD camera can be selected optionally. That is, when the CCD camera provides the angle of view in a wide field, a wide image around a close point will be captured. However, when the angle of view of the CCD camera is in a narrow field, the image around a remote point will be captured with enlargement. Therefore, the angle of view of the CCD camera can be freely said in accordance with the mounted position of the CCD camera.

Alternatively, the single CCD camera 2a may be mounted on a side mirror protruding beyond the side face of the body of the car P. In this case, the CCD camera 2a enables the capture of the image of the front wheel 3a as well as the image concerning the relation of the car P to the surface of the road in the vicinity of the car P.

Preferably, the single CCD camera 2a may be provided with the cleaning device not shown in the drawings, for cleaning the surface (spot surface) of the lens of the CCD camera 2a. In addition, the single CCD camera 2a may be accommodated in a waterproof covering case, and the adjustment in the capture direction of the image can be controlled optionally from the interior or exterior of the covering case.

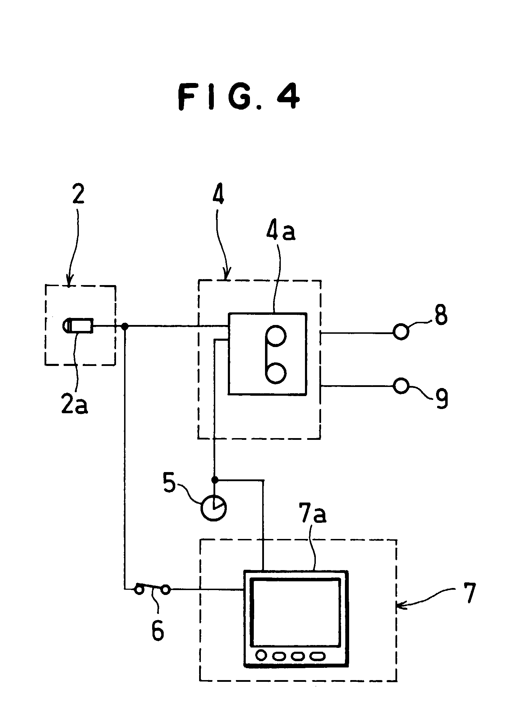

FIG. 4 is a schematic view of the car-mounted image record system according to the present invention. The single CCD camera 2a corresponds to an image capture device represented by a numeral reference 2. Reference numeral 4 denotes an image recording unit. The image recording unit records the captured image of the image capture device 2.

The captured image of the image capture device 2 is recorded or stored by a recording medium 4a such as films, video tapes, photomagnetic discs, and semiconductor memories. Also other media may be used in the image recording unit 4. The image recording unit 4 is arranged near a rear seat of the car P. Reference numeral 5 denotes a date/time information writing device for writing information on the date and time into the captured image to cause the date/time information supplemented image to be recorded on or stored in the record medium of the image recording unit 4. Furthermore, the captured image of the image capture device 2 can also be displayed through a switch 6 on a display 7a of a monitor device 7 mounted on, for example, the dashboard of the car P. With the image recording unit 4, also a manual operation element 8 and an automatic drive element 9 for driving the unit 4 are connected.

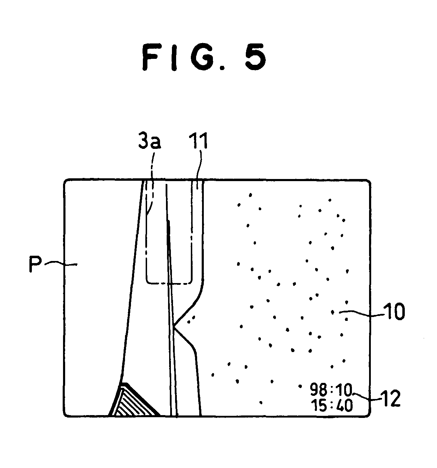

Description now will be made in detail in relation to the displayed image on the display 7a of the monitor device 7. In FIG. 5, the displayed image on the display 7a is shown. According to the image, a part of the car P, the upper part of a fender 11 for covering the front wheel 3a of the car P, and a part of the surface of the road 10 are displayed. In addition, the date and time information 12 is numbered at a lower position on the right side of the image frame.

Preferably, the image recording unit 4 comprises a pair of image recording devices, one image recording device having a simple construction, this image recording device comparatively facilitating such work as the ejection and change of the recording medium 4a and the transportation of the device, the other image recording device being accommodated in a protective box with high mechanical strength similarly to a box used for protecting the voice recorder of an airplane, the airtight interior of the protective box being slightly depressurized.

Looking back to FIG. 4, the image recording unit 4 is connected to the automatic drive element 9, which is driven from the start-up of the engine of the car P for operating the image recording unit 4. When the image recording unit 4 starts its operation, the image of the scenery outside of the car P is captured by the image capture device 2. The captured image is recorded on or stored in the recording medium 4a of the image recording unit 4, and is also displayed on the display 7a of the monitor device 7 through with the switch 6 conducting as requested. Then, the date/time information is written on the image by the date/time information device 5. Thereby, the driver can examine the operation of the image capture device 2, and make an adjustment of the capture direction of the image prior to driving. In addition, the driver can pay attention to safe distances at the right and left sides, while putting the car P in the garage.

The image capture device 2 captures the image with reference to the relation of the car P to the surface of the road 10 in the vicinity of the car P during continued running of the engine. The captured image is recorded on or stored in the image recording unit 4 at the same time. The operations of capture and record/storage continue for a predetermined time after the engine is switched off. After a predetermined time has passed, the capture and record/storage operations stop automatically.

Additionally, the capture and record/storage can be manually operated through the manual operation element 8. That is, the driver can look at the image which is captured by the image capture device 2 and displayed on the display 7a, even without starting the engine of the car P. At the same time, the captured image is recorded on or stored in the image recording device 4. Therefore, the driver can always get to know the state of the image from the image capture device 2, and whether the car-mounted image record system is on or not or is down.

When the drivers starts the engine of the car P, the image capture device 2 starts the capture of new images. The image recording unit 4 records or stores the new images in the recording medium 4a, whose record area succeeds to that of the images captured by the image capture device 2 during the previous time when the engine was switched off. The image recording unit 4 contains a plurality of recording media 4a therein. If one of the recording media of the image record device approaches approximately the full capacity, the next recording medium is starting to record the captured images for a predetermined time period.

That is, the images captured by the image capture device 2 are recorded on or stored in the plurality of recording media 4a of the image recording unit 4 without a break. Therefore, if the car P of the driver has an accident, the cause of the accident can be investigated by the reproduction of the recording media.

Additionally, when the engine of the car P is switched off, the image recording medium 4a of the image recording unit 4 can reproduce the recorded images to be displayed on the display 7a of the monitor device 7 mounted in the car P. Thereby, the driver can examine the recording or storing state of the image recording unit 4 before driving the car P.

Further, additionally, it will be understood that one of the devices of the image recording unit 4 is accommodated in the protective box with high mechanical strength, as described above.

If the car P of the driver has an accident, the investigation of the accident can be suitably made a use of one of the image recording media 4a of the image recording unit 4. Therefore, the status of the relation of the car P to the surface of the road 10 in the vicinity of the car P can be reproduced.

As described above, the CCD camera 2a can be arranged anywhere at the car P in accordance with a change of the capture direction and the angle of view thereof. Therefore, the captured image can be obtained in relation of the car P to the surface of the road 10 in the vicinity of the car P. In addition, the CCD camera 2a is directed in such a manner that a partial image of the car P is captured. Examples of positions of the mounted CCD camera 2a will be described hereinafter. As described above, they CCD camera 2a is mounted at the side opposite to the driver's seat. All of the following examples and drawings for describing them are applied to Japanese cars. That is, if the described car P is a left hand-steered one, it is observed that the CCD camera 2a is mounted on a location corresponding to the examples, but at the right side of the car P.

FIG.s 6 and 7 are a top plan view and a side view, respectively, illustrating a second example for mounting the CCD camera 2a. The CCD camera 2a can be mounted on the upper surface of the rear portion on the left side of the car P facing in the forward and downward directions, the CCD camera 2a protruding from the side edge of the rear portion. It can capture an image including the left rear wheel 3b and an area B₂ of the surface of the road 10 in the vicinity of the left rear wheel 3b. In addition, the CCD camera 2a is directed to capture a partial image of the car P.

FIG.s 8 and 9 are a plan view and a side view, respectively, illustrating a third example for mounting the CCD camera 2a. The CCD camera 2a is mounted on the side surface on the left side from the upper surface at the front portion of the roof surface of the car P, facing in the downward direction and capturing an area B₃.

FIG.s 10 and 11 are a plan view and a side view, respectively, illustrating a fourth example for mounting the CCD camera 2a. It is mounted on the side surface on the left side at the upper surface at the rear portion of the roof of the car P, facing in the downward direction and capturing an area B₄.

FIG.s 12 and 13 are a plan view and a side view, respectively, illustrating a fifth example for mounting the CCD camera 2a. It is mounted near the front bumper 14a on the left side of the car P, facing in the rearward and downward directions and capturing an area B₅.

FIG.s 14 and 15 are a plan view and a side view, respectively, illustrating a sixth example for mounting the CCD camera 2a. It is mounted near or at the rear bumper 14b, facing in the forward and downward directions and capturing an area B₆.

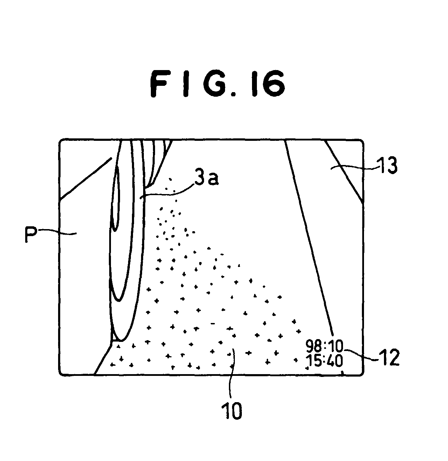

With the construction of the fifth and sixth examples described above, the CCD camera 2a can capture a secure image of the relation between the surface of the road 10 and the front or rear wheel 3a, 3b. In addition, the CCD camera 2a allows to capture the image of a traffic line 13 (Fig. 16) employed as a traffic sign. In further addition, the CCD camera 2a can capture even the image of the track of the wheel 3a.

### Embodiment 2

According to the first to sixth examples for mounting the CCD camera 2a, the angle of view for the CCD camera 2a was directed to an image including the main capture of the surface of the road 10 in the vicinity of the wheel. However, the CCD camera 2a allows a captured image of a wider field of view by the use of a wide-angle lens. When the wide-angle lens is used for the CCD camera 2a, the image of the scenery outside of the car P of the driver can be captured. The captured image includes for example the opposite side, a shoulder and a guard rail of the road, and other scenes, etc. The CCD camera 2a also partially captures the body of the car P. Thereby, the movement of the car P of the driver is clarified concerning the relation of the car P to the surface of the road 10 as viewed objectively. That is, the CCD camera 2a used as the wide-angle camera allows to capture images in a wider field of view. It provides for recording not only the image of the surface of the road 10 under and at the side of the car P, but also of a considerable part of the side face of the car P.

Further description now will be made with reference to the CCD camera 2a using the wide-angle lens. FIG.s 17 and 18 are a top plan view and a side view, respectively, illustrating an example for the location of the CCD camera 2a used with the wide-angle lens. Such camera is mounted on the left side surface of the front portion of the roof of the car P facing in the backward and downward directions, so that it also captures the image of the scenery behind the running car P.

With the arrangement of FIG.s 17 and 18, the CCD camera 2a with the wide-angle lens allows to capture not only the image of the surface of the road 10 under the car P and in the vicinity thereof (an area shown by oblique lines hatching), but also the image of the scene behind the running car P (shown by a continuous line arrow).

FIG.s 19 and 20 are a top plan view and a side view, respectively, illustrating a second example for mounting the CCD camera 2a used with the wide-angle lens. The CCD camera 2a is mounted on the left side surface at the rear portion of the roof of the car P, facing in the forward and downward directions.

With the arrangement of FIG.s 19 and 20, the camera 2a allows to capture not only the image of the surface of the road 10 under and in the vicinity of the car P (an area shown by oblique lines hatching), but also the image of the scene ahead of the running car P (shown by a continuous line arrow).

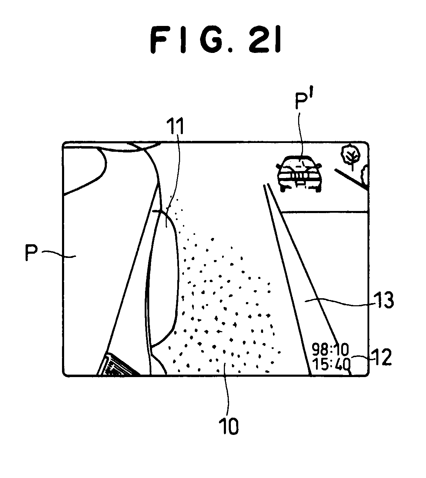

Description now will be made in detail with reference to the image displayed on the display 7a of the monitor device 7, when the CCD camera 2a with the wide-angle lens is used. FIG. 21 is a view illustrating the displayed image on the display 7. It includes a part of the body of the car P, a part of the fender 11 for covering the front wheel 3a, a part of the surface of the road 10, and the date/time information 12, similarly to FIG. 5. The display 7 also shows the traffic line 13 adjacent to the car P of the driver, and a car P' beyond the traffic line 13 in front of the car P of the driver.

As described above, the CCD camera 2a with the wide angle lens enables to capture the image showing a wider scenery outside of the car P, and also the image showing the surface of the road 10 in the area under and in the vicinity of the car P. Therefore, they CCD camera 2a will provide the captured image of the running state of other cars. The information on the running state of other cars can be utilized as an important evident material after a traffic accident.

In addition, if a color camera is employed for the CCD camera 2a, a signal lamp of a signal captured in the image frame will be recorded with colors green, yellow, or red. Therefore, when an inquisition is made after a traffic accident, the captured image of the CCD camera 2a proves to be an important evidence because the color of the signal lamp is identified and the running states of the objective cars are detected. Thus, if the car of a driver is provided with the system, the driver will have to pay attention to his driving.

### Embodiment 3

FIG.s 22 and 23 illustrate a car P, which is provided with a system having four capture devices comprising first, second, third, and fourth CCD cameras 2b, 2c. The first and second CCD cameras 2b are mounted on opposite side surfaces of the front portion of the car, and the third and fourth CCD cameras 2c are mounted on opposite side surfaces near the upper surface of the rear portion of the car. The first and second CCD cameras 2b are used as rear vision cameras and are directed to the backward scenery. The third and fourth CCD cameras 2c are used as front vision cameras and are directed to the forward scenery. The captured images of the first and second CCD cameras 2b include a vision of the surface of the road 10 at the vicinal area B₂ to the rear wheels (compare FIG.s 6, 7) of the car P, and preferably, a partial vision of the body of the car P. The captured images of the third and fourth CCD cameras 2c include the vision of the surface of the road 10 at the vicinal area B₁ to the front wheels (compare FIG.s 2, 3) of the car P, and preferably, a partial vision of the body of the car P. Accordingly, the first and third or second and fourth CCD cameras 2b, 2c are mounted at suitable positions of the car P opposite to each other, respectively.

With the construction of FIG.s 22 and 23, the system enables captured images showing the relation between opposite sided surfaces of the body of the car P and the surface of the road 10 under and in the vicinity of the car P. The system also enables captured images of wider range of frontward and backward visions with respect to the driving car P. Thus, the scenery of the running state of the car P can be captured and recorded from every angle of view of the four CCD cameras.

In the car P of FIG.s to 22 and 23, even if one of the first and third CCD cameras 2b, 2c or the second and fourth CCD cameras 2b, 2c is damaged, the image of the side surface of the car P is captured or recorded after the damage. The first or second CCD cameras 2b capture visions of the same area as one of the third or fourth CCD cameras 2c with respect to the side of the car P. Thus, for example, when the lens of the first CCD camera 2b gets soiled, still the third CCD camera 2c allows the reliable capture of the vision of the side of the car P. Therefore, even if not each of the CCD cameras is provided with a cleaning device, the running state of the car P is continuously recorded. It will be understood that the driver of the car P has to pay attention to his driving.

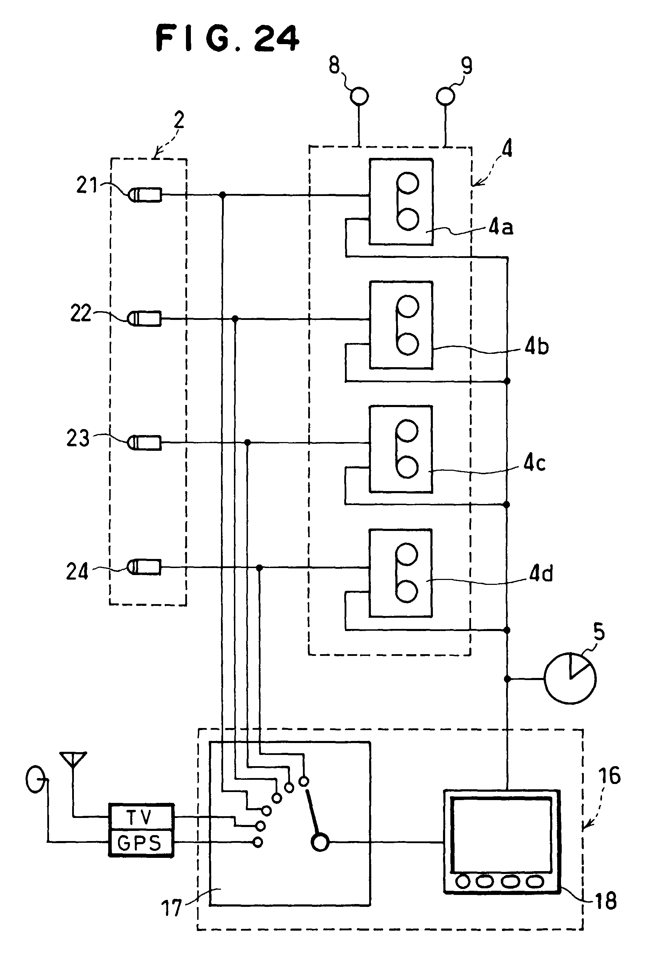

FIG. 24 illustrates a car-mounted system according to the third embodiment of the present invention. The car-mounted system includes a plurality of image capture devices 21 to 24, and the image recording unit 4. The captured devices 21 to 24 correspond to the above four CCD cameras 2b and 2c mounted at suitable positions of the opposite sides of the car P, respectively. Each of the image capture devices 21 to 24 captures both of the images of the running car P and the backward or forward vision of the running car P, and the image recording unit 4 records the captured images of each of the image capture devices 21 to 24. The image recording unit 4 has a recording medium 4a, 4b, 4c, 4d provided therein for recording or storing the captured image of each of the devices 21 to 24, respectively. The car-mounted system also includes the date/time-information writing device 5 for recording information on date and time, and the date/time information and the captured images are together displayed on a display 18 of a monitor device 16. The monitor device 16 is mounted on the surface of the dashboard, for example of the car P, and comprises the display 18 and a selection switch 17 for selecting the image displayed on the display 18 from: the captured images of the CCD cameras 21 to 24, a TV image, and the displayed image for a navigating system. Therefore, the display 18 can display either of the captured images, the TV image, or the displayed image for the navigation system in accordance with the operation of the selections switch 17.

When the image recording unit 4 is actuated through the manual operation element 8, or the automatic drive element 9 is driven for example by starting the engine, the captured images of the CCD cameras 21 to 24 are recorded on or stored in the image recording media 4a to 4d, respectively.

As clarified from the above description of the first embodiment, when the predetermined time has passed after the stop of the engine of the car P, the car-mounted image record system stops its capturing, displaying, and recording or storing operations. If the car-mounted record system is operated through the manual operation element 8 before the start-up of the engine, the operation of the car-mounted system is stopped by the release of the manual operation element 8.

When the car P runs, the driver manually operates the selection switch 17 so that the display 18 displays the captured images of the rear vision camera 2b mounted at the front portion of the body of the car P. Therefore, the driver receives information on the backward scenery on the right to and left sides of the car P. In addition, the driver can examine the capture or displaying state of the car-mounted image record system and check whether there is any trouble with the system. As a result, the car-mounted image record system will be more effectively operated.

As becomes clear from the above description, firstly, since the captured images of the image capture devices 21 to 24 are recorded or stored in the different image recording media of the image recording unit 4, the evidence of an accident is exactly proved. Secondly, since each of the captured images is displayed on the display 18 with the date/time-information written by the date/time-information writing device 5, the movement of the car P is exactly recorded. Even if the plural captured images are reproduced at different times to each other, the movement of the car P can be easily reproduced from the date/time-information displayed on the display 18.

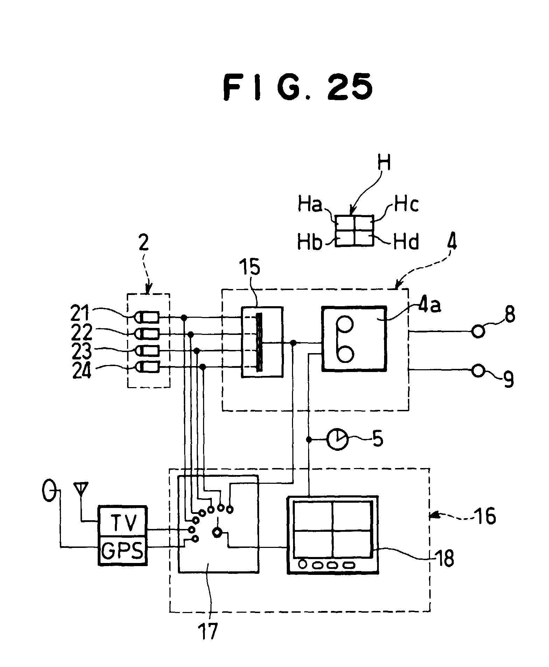

FIG. 25 illustrates a car-mounted image record system having another construction. A rectangular block H is a scope of the display 18. That rectangular scope H is divided into four square areas Ha, Hb, Hc and Hd of equal size. The image capture unit 2 comprises the single image capture devices 21 to 24. The captured images of the image capture devices 21 to 24 are displayed on the areas Ha, Hb, Hc and Hd in the scope of the display 18, respectively.

The image capture unit 2 is connected to the image recording unit 4 and the monitor device 16. The image recording unit 4 includes a synthetic or composite adapter 15, and the only image record medium 4a.

The composite adapter 15 is connected to the image capture unit 2 so as to produce the composite image of the captured images of the image capture devices 21 to 24. The composite image is recorded on or stored in the image recording medium 4a connected to the composite adapter 15.

Furthermore, the image recording unit 4 is connected to the manual operation element 8 and to the automatic drive element 9. Therefore, the image recording unit 4 is also operated through the manual operation element 8 or the automatic drive element 9 driven by the start-up of the engine of the car P, in the same way as in the other vision systems for cars described above. However, in this car-mounted image record system, the captured images of the image capture devices 21 to 24 are compounded, so that the composite image is recorded on or stored in the recording medium 4a.

The monitor device 16 includes the selection switch 17, and the display 18, as before. The selection switch 17 is connected to each of the image capture devices 21 to 24, to a TV unit, and to a navigation unit GPS. The display 18 is connected to the selection switch 17, so that either of the images of the image capture devices 21 to 24, of the TV unit, or of the navigation unit is displayed on the display 18 through the selections switch 17. In addition, the selections switch 17 is connected to the composite or synthetic adapter 15. Thereby, also the composite image can be displayed on the display 18 of the monitor device 16.

As described above, the monitor device 16 is mounted on, for example, the surface of the dashboard of the car P. Therefore, the driver of the car P can select either of the images of each of the image capture devices 21 to 24, the TV unit, the navigation unit GPS, and the composite adapter 15, by the selection switch 17 of the monitor device 16. Thereby, since the captured images or the composite image can be displayed on the display 18, the driver can receive information on the vision on the right and left sides of the car P, and can also check the capturing or recording state of the car-mounted image record system.

Furthermore, since the captured images of the image capture devices 21 to 24 are compounded by the composite adapter 15, they are recorded on or stored in the single recording medium 4a. Therefore, the image recording unit 4 can be built in a size smaller than that of the other car-mounted image record system shown in FIG. 24. Further, additionally, it will be understood that the record device of the image recording unit 4 can be accommodated in a protective box with high mechanical strength, as described above.

Moreover, since the captured images are simultaneously displayed in the same scope of the display 18, even if one of the image capture devices 21 to 24 for example, had had a breakdown during driving, the driver could still immediately receive information on the vision on the right and left sides of the car P by the rest of the image capture devices. Therefore, the driver can pay attention to save driving.

Referring again to FIG. 25, the system comprises the date/time information writing device 5. The information on date and time is also written in the captured image of the image capture devices in the same way as in the other embodiments. In the case of this embodiment, the information is written in each of the captured images of the image capture devices 21 to 24 by the date/time information writing device 5.

The car-mounted image record system can be provided with devices for additionally writing information on the running speed, on braking, on blinker or indicator actuation, etc. In addition, the car-mounted image record system can be provided with a microphone, so that the sounds of crashes, brakes, and horns, the music of a signal for persons of advanced age etc. can be recorded or stored. These record sounds allows a more correct investigation of a traffic accident, even if all the image capture devices 21 to 24 had a breakdown, or were deviated from the correct location by the crash of the car P.

The above description of the third embodiment was directed to four image capture devices. However, four image capture devices should not be construed as a limiting number. For example, when four image capture devices have still blind spots around the car P, the number of the image capture devices may be increased, even if a few overlaps of the captured images are caused. In addition, it is understood that the number and location for mounting the image capture devices depend on the form of the body of the car.

Accordingly, the arrangement of the image capture devices 21 to 24 may be such as of the image capture devices 2 given in the description on the above first and second embodiments. In this case, four image capture devices 2 are provided at suitable positions of the car P in a symmetric arrangement with respect to the right and left sides or the front and rear sides.

The descriptions on the image capture devices were directed to CCD cameras, relating to be above embodiments. However, it should be noted that the image capture devices are not limited to such CCD cameras.

Two image capture devices may be provided at the same location of the car side by side. For example, the two image capture devices are directed in different directions to each other, or have different blind spots from each other. Or for example, the two image capture devices comprise a vision camera for the night, and a vision camera for daylight. Or, for example, one of the two image capture devices is a spare camera.

As described above, the present invention provides for the capture and record of images referring to the relation between the car of the driver and the surface of the road in the vicinity of the car, which are taken seriously in the inspection of a collision. Therefore, when the recorded information is reproduced, the movement of the car is exactly proved.

There recorded information will contribute to the decrement of traffic accidents as well as to the investigation. When the recorded information is reproduced after the accident, it can be amply proved whether the driver did drive safely or not. Therefore, the car-mounted image record system promotes save driving by the car driver. As a result, the car-mounted image record system more effectively leads to a reduction of the number of traffic accidents.

When the driver installs the car-mounted image record system in his car, he proves his intention of save driving, and he will endeavour to drive safely. If he has an accident, the recorded information of the car-mounted image record system will be a proof of the safe driving for the driver. Therefore, the car-mounted image record system ensures the security of the driver.

## Claims

1. A car-mounted image record system including: at least one image capture means (2, 2a, 2b, 2c, 21 - 24) provided a the body of the of a car (P) for capturing the image(s) of the scenery outside of the car, image display means (7, 7a, 16, 18) provided at the interior of the car for displaying the image(s) captured by the image capture means, and image recording means (4, 4a - 4d) provided at or in the car for recording the captured image(s), characterized in that the or each of the image capture means (2, 2a, 2b, 2c, 21 - 24) captures images of both: a part of the car (P), and the surface of the road in relation to the part of the car; that the image display means (7, 7a, 16, 18) have a display (7a, 18) and a switch (6, 17); that a manual operation means (8) is connected to said image recording means (4, 4a - 4d) for manually operating it; that an automatic drive means (9) is connected to said image recording means, the automatic drive means causing the image recording means to be automatically driven by a start-up of the engine of the car; and that a time/date information writing means (5) is connected to said image recording means, the time/date information writing means additionally writing information on the date and time, which information is recorded with the captured image by said image recording means.

2. The car-mounted record system defined in claim 1, characterized in that the time/date information writing means (5) is also connected to the display means (7, 7a, 16, 18) for displaying the information on the date and time on the display (7a, 18) of the display means together with the captured image.

3. The car-mounted image record system defined in claim 1 or 2, characterized in that said image capture means (2, 2a - 2c, 21 - 24) includes a lens and cleaning means for cleaning the lens of the image capture means.

4. The car-mounted image record system defined in any of claims 1 to 3, characterized in that said image capture means has an angle of view of 50 to 85 degrees.

5. The car-mounted image record system defined in any of claims 1 to 4, characterized in that said image recording means (2, 2a - 2c, 21 - 24) comprises two image recording devices, one of the image recording devices being protected by a protective box having very high mechanical strength.

6. The car-mounted image record system defined in any of claims 1 to 5 , characterized in that the image capture means (2, 2a) for capturing the image of vision outside of the car (P) is mounted at the outside of the car so as to protrude preferably sideward from the car and is facing in a direction having a component longitudinal to the car and a downward component so that the captured image includes images of the surface of the road (10) in the vicinity of the car and also of a part of the body of the car.

7. The car-mounted image record system as defined in claim 6, characterized in that the image capture means (2a) is mounted on the upper surface of the front portion of the car (P) protruding from the upper surface, with a facing direction having backward and downward components, the captured image including images of the surface (B₁) of the road (10) in the vicinity of one of the front wheels (3a).

8. The car-mounted image record system defined in claim 6, characterized in that the image capture means (2a) is mounted on the upper surface at the rear portion of the car (P) protruding from the upper surface, with a facing direction having forward and downward components, the captured image including images of the surface (B₂) of the road (10) in the vicinity of the front wheel (3a).

9. The car-mounted image record system defined in claim 6, characterized in that the image capture means (2a) is mounted on the side surface of a side mirror, with a facing direction having a forward component, the captured image including images of the front wheel (3a) and of the surface of the road in the vicinity of the front wheel.

10. The car-mounted image record system defined in claim 6, characterized in that the image capture means (2a) is mounted on a side surfaces adjoining to the upper surface at the front portion of the roof of the car (P), with a facing direction having backward and downward components, the captured image including images of a part of a side surface of the car and of the surface (B₃) of the road (10) extending from the area under the car to the vicinal area around the car or in the vicinity of the car.

11. The car-mounted image record system defined in claim 6, characterized in that the image capture means (2a) is mounted on a side surface adjoining to the upper surface at the rear portion of the roof of the car (P), with a facing direction having forward and downward components, the captured image including images of a part of a side surface of the car and of the surface (B₄) of the road (10) extending from the area under the car to the vicinal area around the car or in the vicinity of the car.

12. The car-mounted image record system defined in claim 6, characterized in that said image capture means (2a) is mounted on a side surface of the car, the side surface being at the vicinal portion to the fender (11) of the front wheel (3a), with a facing direction having backward and downward components, the captured image including images of a part of the side surface of the car, and the surface (B₅) of the road (10) extending from the area under the car to the area in the vicinity of the car.

13. The car-mounted image record system defined in claim 6, characterized in that said image capture means (2a) is mounted at the vicinal position of the door of the car (P), with a facing direction having forward and downward components, the captured image including images of a part of the side surface of the car, the surface (B₃) of the road (10) extending from the area under the car to the area in the vicinity of the car, and a forward and/or backward vision from the car.

14. The car-mounted image record system defined in any of claims 1 to 13, characterized in that said image capture means includes a pair of image capture means (2b, 2c).

15. The car-mounted image record system defined in claim 14, characterized in that said paired image capture means (2b, 2c) are mounted on the upper surface at the front portion of the car (P), with facing directions having backward and downward components, respectively, each of the image capture devices protruding from the upper surface, the captured image including images of a part of the side surfaces of the car, the surface of the road (10) extending from the area under the car to the area in the vicinity of the car, and a backward vision from the car.

16. The car-mounted image record system defined in claim 14, characterized in that one of said paired image capture means is mounted on the side surface of a side mirror, with a facing direction having forward and downward components, the captured image including images of the front wheel, the surface of the road (10) in the vicinity of the front wheel, and a part of the body of the car (P).

17. The car-mounted image record system defined in claim 14, characterized in that said paired image capture means are mounted on a side surface adjoining to the upper surface at the front portion of the roof of the car (P), with facing directions having forward and downward components, and on a side surface adjoining to the upper surface at the rear portion of the roof of the car, with facing directions having forward and downward components, respectively, the captured image including images of a part of the side surface of the car, and the surface of the road (10) extending from the area under the car to the vicinal area around the car.

18. The car-mounted image record system defined in claim 14, characterized in that said paired image capture means are mounted on a side surface of the car (P), the side surface being at the vicinal portion to the fender (11) of the front wheel (3a) of the car, with facing directions having backward and downward components, and on the side surface of the car, the side surface being at the vicinal portion to the back bumper, with facing directions having forward and downward components, respectively, the captured image including images of a part of the side surface of the car, and the surface of the road extending from the area under the car to the area in the vicinity of the car.

19. The car-mounted image record system defined in claim 14, characterized in that said paired image capture means are mounted at the vicinal position from a door of the car, with facing directions having backward and downward components, and at the vicinal position from a door of the car, with facing directions having forward and downward components, respectively, the captured image including images of a part of the side surface of the car, the surface of the road (10) extending from the area under the car to the area in the vicinity of the car, and a backward vision from the car.

20. A car-mounted image record system as defined in any of claims 1 to 19, characterized in that it includes a plurality of said image capture means (21 - 24), one of the image capture means is paired with another image capture means, one of the images captured by the image capture means including an image in part overlapping with the image captured by another capture means, the image display means (16, 18) having a display (18) and a switch means (17), and said switch means being connected to each of the image capture means (21 - 24) and to additional image signal output means and enabling selective display of the images on said display of the image display means.

21. The car-mounted image record system defined in claim 20, characterized in that said display (18) of the image display means (16) displays all of the images captured by the plurality of the image capture means (21 - 24), a scope (H) of the display being divided into plural areas (Ha - Hd) with the same size, said images being displayed on the plural areas of the scope of the display, respectively.

22. The car-mounted image record system defined in claim 20 or 21, characterized in that it further includes a composite means (15) for compounding images captured by the plurality of image capture means (21 - 24), the composite means being connected to said image recording means (4) and said switch (17) of the image display means (16), the recording means and the composite means (15) comprising a single construction, the recording means recording the composite image and said display (18) of the image display means (16) displaying the composite image.

23. The car-mounted image record system defined in any of claims 1 to 22, characterized in that one or each of the image capture devices (2, 2a - 2c, 21 - 24) includes a wide-angle lens.
